(19) Europäisches Patentamt

European Patent Office

Office européen des brevets

(11) **EP 1 615 360 A2**

(12) **EUROPEAN PATENT APPLICATION**

(43) Date of publication:
**11.01.2006 Bulletin 2006/02**

(51) Int Cl.:
*H04B 10/18* (2006.01)   *G02B 6/34* (2006.01)

(21) Application number: **05000901.8**

(22) Date of filing: **18.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **09.07.2004 JP 2004203891**

(71) Applicant: **FUJITSU LIMITED**
**Kawasaki-shi,**
**Kanagawa 211-8588 (JP)**

(72) Inventors:
• **Isomura, Akihiko,**
**Fujitsu Limited**
**Kawasaki-shi,**
**Kanagawa 211-8588 (JP)**

• **Rasmussen, Jens C.,**
**Fujitsu Limited**
**Kawasaki-shi,**
**Kanagawa 211-8588 (JP)**

• **Kubo, Teruhiro,**
**Fujitsu Network Technologies Ltd.**
**Yokohama-shi,**
**Kanagawa 222-0033 (JP)**

(74) Representative: **HOFFMANN EITLE**
**Patent- und Rechtsanwälte**
**Arabellastrasse 4**
**81925 München (DE)**

(54) **Polarisation mode dispersion compensation**

(57)   A signal for each wavelength is extracted from multiplexed light signals that are wavelength-multiplexed and transmitted, and an evaluation value showing a degree of signal deterioration caused by polarization mode dispersion for each wavelength is measured. Then, the wavelength of a target of the polarization mode dispersion compensation is selected based on the evaluation value and the polarization mode dispersion compensation is implemented for only the light signal of the selected wavelength.

**EP 1 615 360 A2**

FIG. 2A

**Description**

**Background of the Invention**

**Filed of the Invention**

The present invention is related to a polarization mode dispersion (PMD) compensation apparatus and a method thereof in a light wavelength divisionmultiplexing (WDM) transmission system.

**Description of the Related Art**

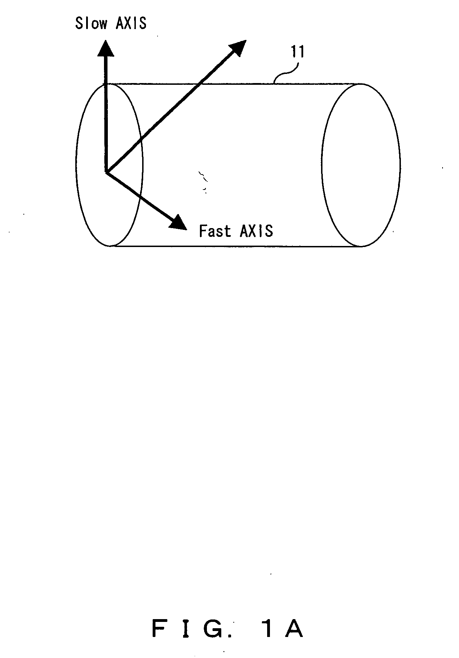

In high-speed light transmission systems with the transmission speed of more than 10Gbit/s, the waveform deterioration caused by PMD becomes a transmission distance restriction factors. Since the core of a single mode fiber (SMF) is not a perfect circle and it is slightly elliptic, birefringence occurs. As shown in Fig. 1A, a light signal that is inputted into a fiber 11 is separated by birefringence into two polarization mode components (a fast-wave axis and a slow-wave axis) that are orthogonal to each other. Since the transmission speed in the fiber 11 differs between the two separated polarization mode components, a differential group delay (DGD) occurs between the two modes.

A phenomenon such that a differential group delay occurs between modes after a light signal passes a birefringence medium including a fiber is called PMD. The SMF that has the core of an ideal perfect circle does not generate PMD. The core of an actual SMF, however, generates slight distortion (birefringence) due to a production process, a temperature change or various stresses such as bending, twist, tension, etc.

The PMD does not have a correlation among wavelengths but it has a property such that the PMD fluctuates with time due to the change of transmission path environments such as a temperature and a stress, etc. Therefore, an automatic PMD compensation device for automatically compensating the light signal waveform deterioration caused by PMD at a reception end has been proposed (for example, refer to non-patent literature 1).

The PMD compensation device includes three parts, namely a polarization control device, a birefringence component (DGD component) and a PMD monitor. The light signal deteriorated by PMD is inputted into a variable DGD light circuit for canceling the PMD condition in a transmission path at the former stage of a light reception device. At this time, the light waveform shaping is carried out by adjusting the state of polarization (SOP) inputted into a variable DGD light circuit using a high-speed polarization control device.

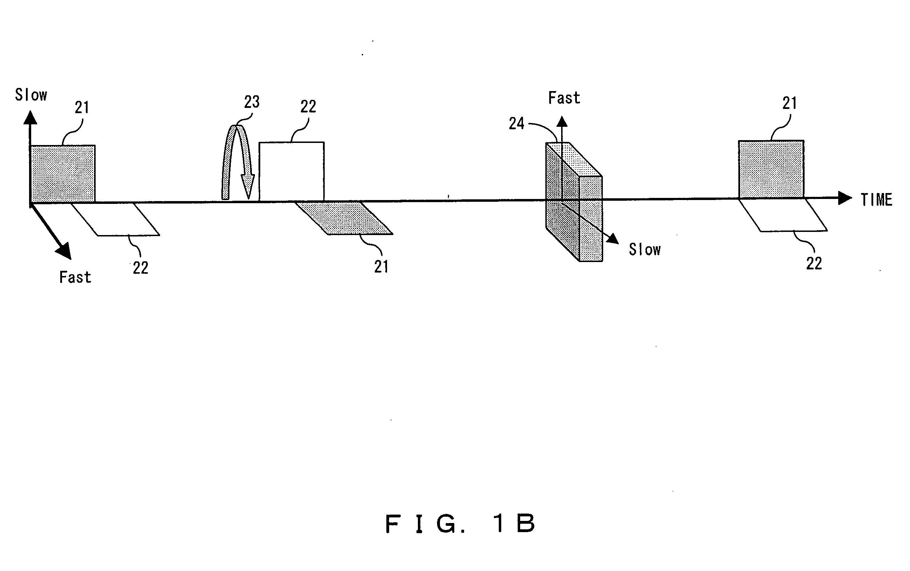

Fig. 1B shows a condition of the PMD compensation by such a PMD compensation device. A light signal is separated into a component 21 on a slow wave axis and a component 22 on a fast wave axis, and the thus-separated components proceed on a transmission path. Then, the polarization states of these components are adjusted by a polarization control device 23 to be inputted into a variable DGD light circuit 24. The variable DGD light circuit 24 gives to the light signal a delay that is opposite to the delay of the light signal and compensates the differential group delay.

The polarization control device can move the polarized light of a light signal to an optional state. The following are polarization control devices.

(1) Polarization control device using niobium acid lithium (LiNbO3) (for example, refer to non-patent literature 2)

LiNbO3, etc. for forming a light waveguide on a substrate is embedded and an electrode is placed sandwiching the waveguide. Polarization is controlled using an electro-optic effect generated by adding a voltage to an electrode.

(2) Polarization control device using liquid crystal (for example, refer to nonpatent literature 3)

The polarization device is obtained by sandwiching liquid crystal with two glass plates. In respect of liquid crystal, the arrangement of molecules changes when a voltage is applied. Polarization is controlled by rotating the polarized light of a light signal along the molecule arrangement.

(3) Polarization control device using a piezoelectric element (for example, refer to nonpatent literature 4)

An element for adding a pressure to a fiber by adjusting a voltage is used. A polarization control is implemented by transforming the core inside a fiber by adding a pressure to a fiber.

A device having birefringence that is used as a DGD component includes a device using a polarization maintaining fiber (PMF) (for example, refer to nonpatent literature 5). The crystal having birefringence like LiNbO3, vanadic acid yttrium (YVO4), titanium oxide (TiO2), calcium carbonate (CaCO3) other than PMF can be used as a DGD component.

A DGD component other than a device that has birefringence includes a variable delay element. At first, the light signal that is outputted from a multiplexer is separated into two polarization mode components by a polarization beam splitter. The two separated components pass through light paths that are different in distance (fixed time difference lines). The compensation of a differential group delay is implemented by giving to a light signal a PMD property that is opposite to that of a light signal, using the fixed time difference lines. Then, the two polarization mode components are multiplexed by the polarization multiplexer connected to outputs of the fixed time difference lines.

In order to materialize the automatic feed back control of a PMD compensation device, the PMD condition of a light signal should be monitored. Both a spectrum hole burning (SHB) monitor system in which a light signal is transformed into an electric signal and the intensities of a plurality of frequency components in a signal are measured and a DOP monitor system in which the degree of polarization (DOP) of a reception light signal is measured have been proposed.

In the SHB monitor system (for example, refer to nonpatent literature 6), after a light signal is converted into a base-band electric signal using a photodiode, a plurality of frequency components are extracted using a narrow-band band pass filter (BPF), and the signal intensity of each frequency component is monitored.

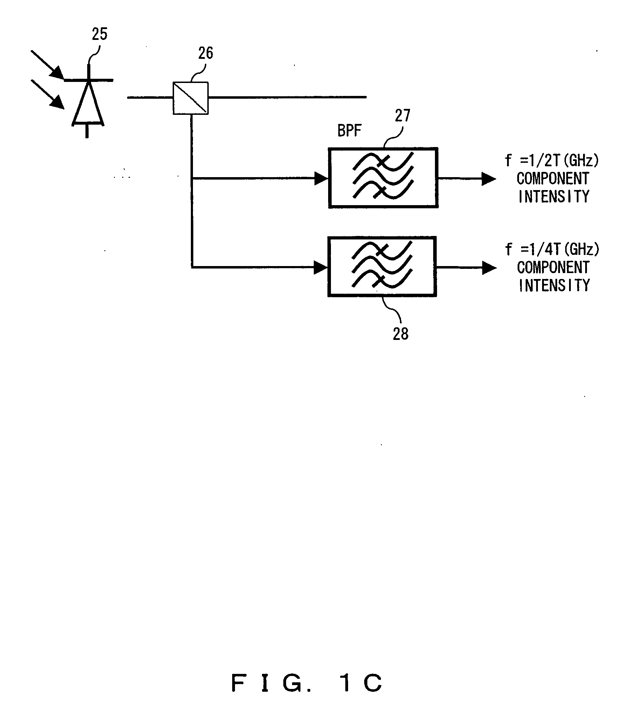

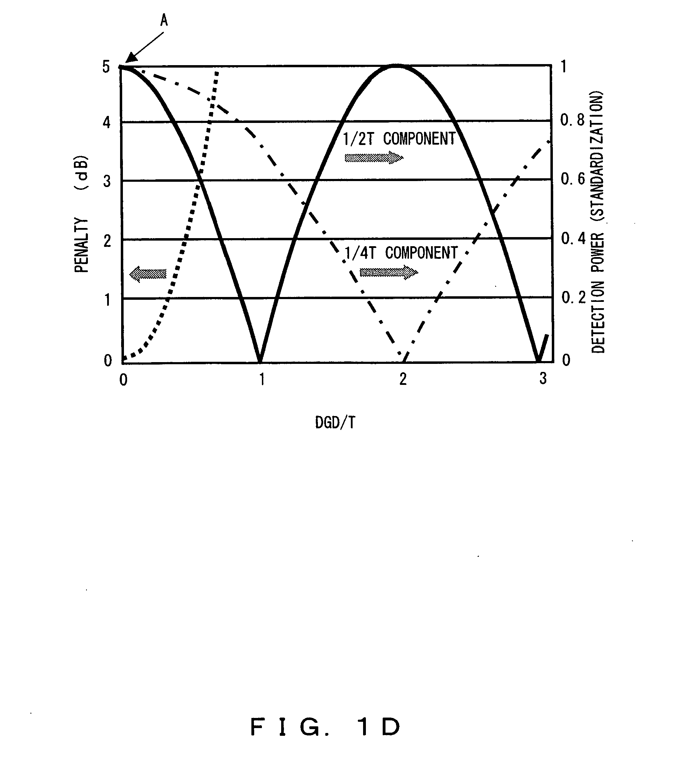

Fig. 1 C shows such an SHB monitor. Fig. 1D shows the signal intensity that is monitored by the SHB monitor of Fig. 1C. The SHB monitor of Fig. 1C comprises a photodiode 25, an optical coupler 26 and BPFs 27 and 28. The BPFs 27 and 28 are wavelength variable filters and extract the frequency components of 1/2T and 1/4T (GHz), respectively while setting the size of one time slot of a light signal to T(ps).

Light waveform compensation is implemented and the penalty can be minimized by feedback-controlling a PMD compensation device in such a way that the monitor values of all the frequency components become a point A of Fig. 1D in order to have a cycle property for the DGD value in a transmission path. On the other hand, however, there is a problem such that it is difficult to distinguish the light waveform deterioration caused by the PMD in a transmission path from the light wave form deterioration caused by wavelength dispersion and a nonlinear effect.

In the DOP monitor system (refer to nonpatent literature 7), a DOP value is calculated by the Stokes vectors (S0, S1, S2, S3) that are detected using a polarizing plate and a wavelength plate. S0 is obtained by measuring the light intensity of one of four beams that are obtained by splitting an input beam using a beam splitter. S1 is obtained by measuring the light intensity after one of the four beams passes through the polarizer that is placed in such a way that an axis thereof is in the position of 0 degree or 90 degrees from the predetermined axis.

S2 is obtained by measuring the light intensity after one of the four beams passes through the polarizer that is placed in such a way that an axis thereof is in the position of 45 degrees or 125 degrees from the predetermined axis. S3 is obtained by measuring the light intensity after one of the four beams passes through the polarizer that is placed in such a way that an axis thereof is in the position of 0 degree or 90 degrees from the predetermined axis and then the beam passes through a polarizer that is placed to have the same axis as that of the light polarizer of S2. At this time, a DOP value can be obtained by an equation (1).

$$DOP = \frac{\sqrt{S_1^2 + S_2^2 + S_3^2}}{S_0} \qquad (1)$$

ADOP value can monitor only a PMD condition neither relying on transmission speed or a light modulation system nor receiving the influence of wavelength dispersion or a nonlinear effect in a transmission path. As the DGD of a light signal increases, a DOP value decreases. Therefore, light waveform compensation is implemented and the penalty can be minimized by feedback-controlling a PMD compensation device in such a way that the DOP value becomes maximum.

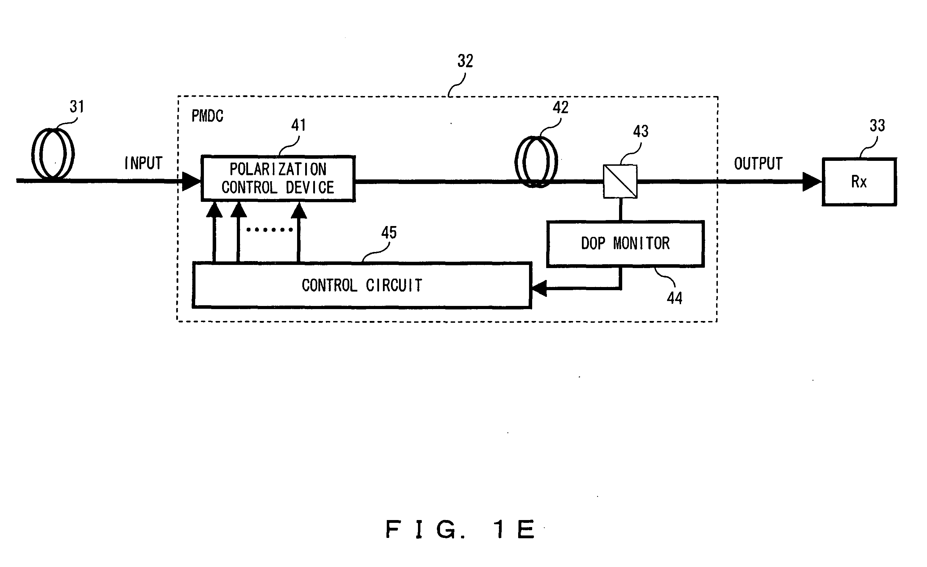

Fig. 1E shows the configuration example of a PMD compensation device. A PMD compensation device 32 of Fig. 1E comprises a polarization control device 41, a PMF 42, an optical coupler 43, a DOP monitor 44 and a control circuit 45. The light signal inputted from a transmission path 31 passes through the polarization control device 41, the PMF42 and the optical coupler 43 to be outputted to a receiver 33. The DOP monitor 44 acquires the information about the Stokes vectors (S0, S1, S2, S3) from the light signal that is split by the optical coupler 43 to be outputted to the control circuit 45. The control circuit 45 calculates a DOP value using the equation (1) and outputs a control signal to the polarization control device 41 according to the value.

Patent literatures 1 and 2 relate to the configuration of the PMD compensation in a light transmission system and a nonpatent literature 8 relates to the evaluation method of a polarization dispersion parameter.

[Patent literature 1] Japanese patent application laid-open publication No. 2001-136125

[Patent literature 2] Japanese patent application laid-open publication No. 2001-203637

[Nonpatent literature 1] F. Heismann et al., "AUTOMATIC COMPENSATION OF FIRST-ORDER POLARIZATION MODE DISPERSION IN A 10 Gb/s TRANSMISSION SYSTEM", ECOC' 98, 1998

[Nonpatent literature 2] Arjan J.P.Haasteren et al., "Modeling and Characterization of an Electrooptic Polarization Controller on LiNb03", Journal of Lightwave Technology, Vol. 11, No.7, 1993, pp. 1151-1157

[Nonpatent literature 3] Zhizhong Zhuang et al., "Polarization controller using nematic liquid crystals", OPTICS LETTERS, Vol.24, No. 10, 1999

[Nonpatent literature 4] Lothar M "WDM Polarization Controller in PLC Technology", Photonics Technology Letters, Vol. 13, No. 6, 2001

[Nonpatent literature 5] T. Takahashi et al., "Automatic compensation technique for timewise fluctuating polarization mode dispersion in in-line amplifier systems", Electronics Letters, Vol. 30, No. 4, 1994, pp. 348-349

[Nonpatent literature 6] H. Ooi et al., "Automatic polarization-mode dispersion compensation in 40-Gbit/s transmission", OFC' 99, paper WE 5,1999
[Nonpatent literature 7] N. Kikuchi, "Analysis of signal degree of polarization degradation used as control signal for polarization mode dispersion compensation", Journal of Lightwave Technology, Vol. 19, No. 4, 2001, pp. 480-486 [Nonpatent literature 8] J. M. Fini et al., "Estimation of polarization dispersion parameters for compensation with reduced feedback", OFC' 01, WAA 6, 2001

In the above-mentioned conventional PMD compensation method, however, there is the following problem.

With the increase of communication volume in the Internet in recent years, a high-speed light transmission system of over 10Gbit/s is used and the waveform deterioration caused by PMD has become a problem. Since PMD does not have a correlation among wavelengths, a PMD compensation device should be arranged for each wavelength in a wavelength multiplexing transmission system. However, when a PMD compensation device is arranged for each wavelength, there arises a problem such that the size and the cost of a compensation node apparatus increase.

## Summary of the Invention

The subject of the present invention is to offer a PMD compensation device and a method thereof for reducing the size and the cost of a compensation node in a light wavelength multiplexing transmission system.

A PMD compensation apparatus of the present invention comprises one or more polarization mode dispersion compensation devices, a demultiplexing device, a light switch for selection device, an extraction device, a measurement device and a control device. The demultiplexing device demultiplexes a multiplexed light signal that is wavelength-multiplexed and transmitted for each wavelength. The light switch for selection device switches an output port of a light signal of each demultiplexed wavelength and selectively outputs a light signal of one or more wavelengths to the polarization mode dispersion compensation device. The extraction device taps a part of the multiplexed light signal and extracts a signal for each wavelength. The measurement device measures an evaluation value that shows a degree of signal deterioration caused by polarization mode dispersion for each wavelength, using the extracted signal. The control device controls the light switch for selection device in such a way that a wavelength of the target of polarization mode dispersion compensation is selected based on the measured evaluation value, a light signal of the selected wavelength is outputted to the polarization mode dispersion compensation device and a light signal of a not-selected wavelength is not outputted to the polarization mode dispersion compensation device.

## Brief Description of the Drawings

Fig. 1A shows two polarization mode components;
Fig. 1B shows PMD compensation;
Fig. 1C shows a wavelength variable filter;
Fig. 1D shows the monitor value of an SHB monitor;
Fig. 1E shows the configuration of a PMD compensation device;
Fig. 2A shows the principle of a PMD compensation device of the present invention;
Fig. 2B shows the probability density of a DGD;
Fig. 3 shows the configuration of the first PMD compensation device;
Fig. 4 shows the relation between a DOP value and a Q penalty;
Fig. 5 shows the configuration of a light transmission system;
Fig. 6 shows the relation between a DOP value and a Q value for each wavelength;
Fig. 7 shows the distribution of a DOP value and a Q value;
Fig. 8 shows a signal and a noise;
Fig. 9 is a flowchart of the first control;
Fig. 10 shows the configuration of the second PMD compensation device;
Fig. 11 is a flowchart of the second control;
Fig. 12 shows the configuration of the third PMD compensation device;
Fig. 13 shows a wavelength selection switch;
Fig. 14 shows the configuration of the fourth PMD compensation device;
Fig. 15 shows the polarization condition on a Poincare sphere;
Fig. 16 is a flowchart of the third control;
Fig. 17 shows the configuration of a PMD compensation device including a wavelength dispersion compensation device;
Fig. 18 shows the deterioration waveform caused by wavelength dispersion and PMD;
Fig. 19 shows a deterioration waveform caused by PMD; and
Fig. 20 shows a waveform after compensation.

## Description of the Preferred Embodiments

The following is the detailed explanation of the preferred embodiments of the present invention in reference to the drawings.

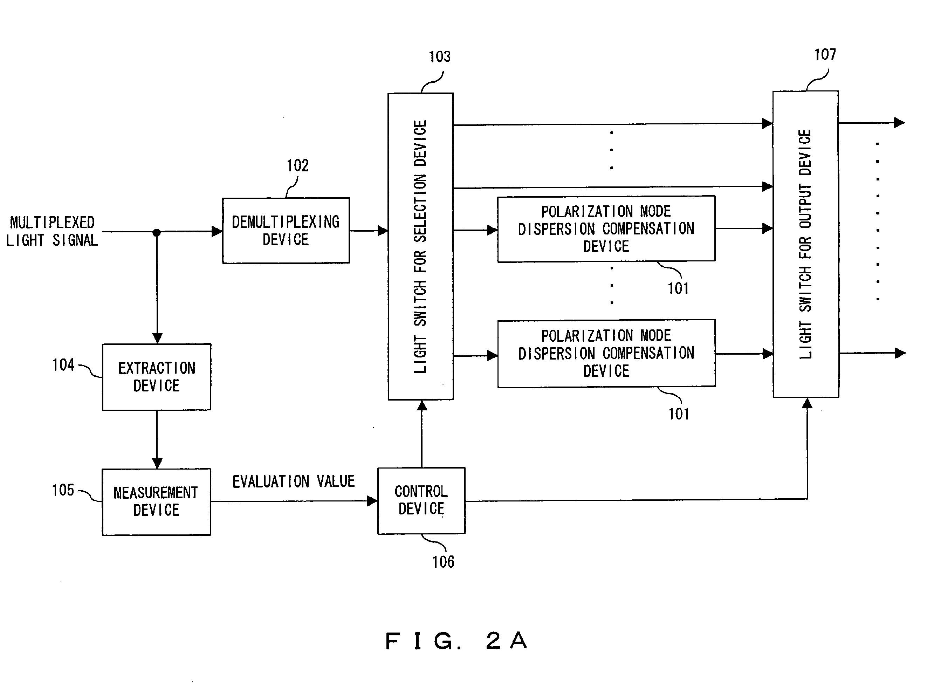

Fig. 2A shows the principle of a PMD compensation device of the present invention.

At the first aspect of the present invention, a PMD compensation device comprises one or more polarization mode dispersion compensation devices 101, a demultiplexing device 102, a light switch for selection device 103, an extraction device 104, a measurement device 105 and a control device 106. The demultiplexing device 102 demultiplexes for each wavelength a multiplexed light signal that is wavelength-multiplexed to be transmitted. The light switch for selection device 103 switches the output port of a light signal of the respective demultiplexed wavelengths and selectively outputs the light signal of one or more wavelengths to the polarization mode dispersion compensation device 101. The extraction device 104 taps apart of a multiplexed light signal and extracts the signal for each wavelength. The measurement device 105 measures an evaluation value indicating a degree of the signal deterioration caused by the polarization mode dispersion for each wavelength, using the extracted signal. The control device 106 controls the light switch for selection device 103 in such a way that a wavelength of the target of polarization mode dispersion compensation is selected and the light signal of the selected wavelength is outputted to the polarization mode dispersion compensation device 101 while the light signal of the not-selected wavelength is not outputted to the polarization mode dispersion compensation device 101, based on the measured evaluation value.

According to such a PMD compensation device, the wavelength of a target of polarization mode dispersion compensation is automatically selected from among light signals of a plurality of multiplexed wavelengths and only the light signal of the selected wavelength is inputted into the polarization mode dispersion compensation device 101 while the light signals of the wavelengths other than the selected wavelength are not inputted into the polarization mode dispersion compensation device 101. Therefore, polarization mode dispersion compensation devices 101 the number of which is equal to the number of wavelengths neednotbeprepared.

At the second aspect of the present invention, the PMD compensation device at the first aspect further comprises a light switch for output device 107. The light switch for output device 107 switches the output port of the light signal that receives polarization mode dispersion compensation by the polarization mode dispersion compensation device 101 with the output port of a light signal of the not-selected wavelength. The control device 106 controls the light switch for output device 107 in such a way that each light signal is outputted to the predetermined route for each wavelength.

According to such a PMD compensation device, even in the case where the light signal of any wavelength is inputted into the polarization mode dispersion compensation device 101 among light signals of a plurality of multiplexed wavelengths, the compensated light signal and the not-compensated light signal can be respectively outputted to the predetermined routes.

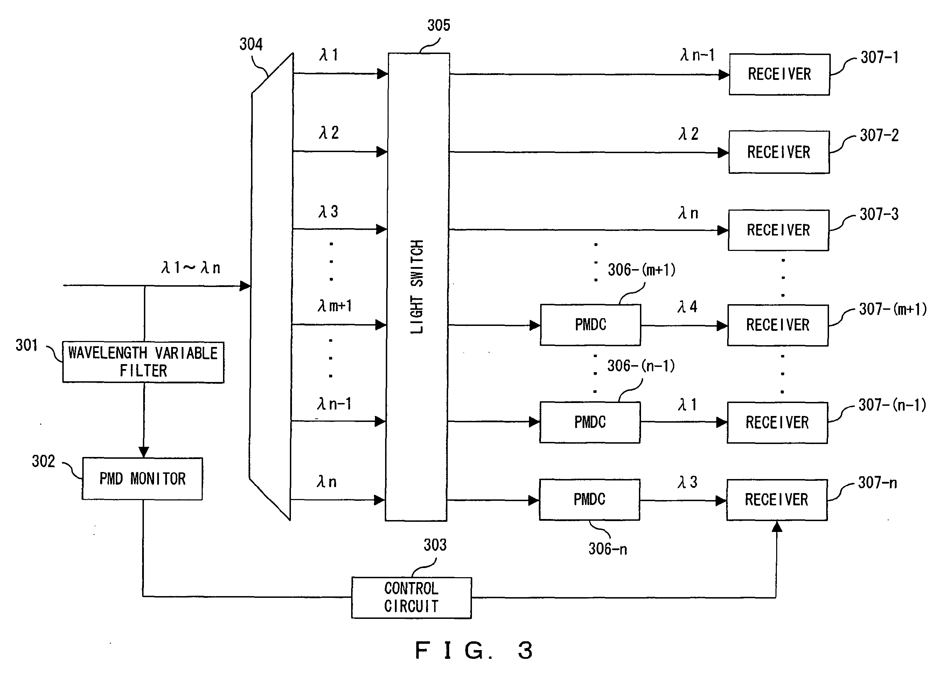

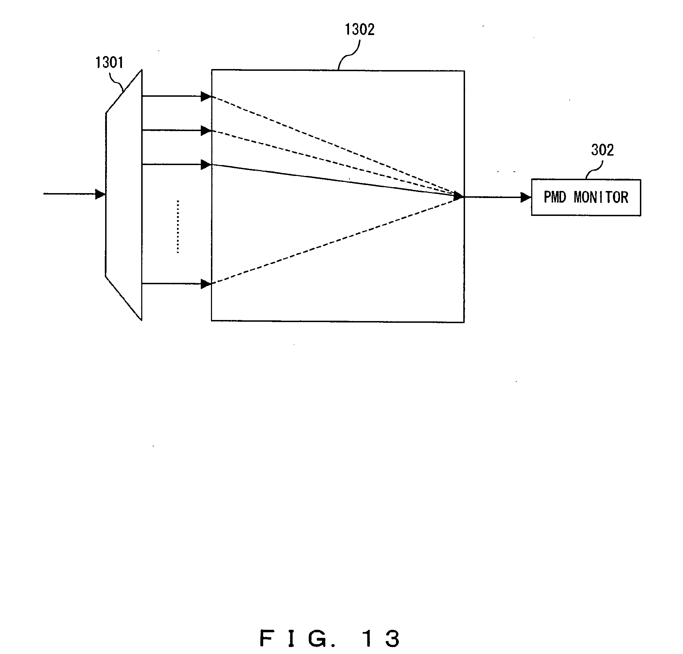

The polarization mode dispersion compensation device 101, the demultiplexing device 102, the light switch for selection device 103 and the measurement device 105 correspond to, for example, a PMDC 306, a demultiplexer 304, a light switch 305 and a PMD monitor 302 of Figs. 3, 10, 12, 14 and 17 that are described later. The extraction device 104 corresponds to, for example, wavelength variable filters 301 of Figs. 3, 10, 12, 14 and 17 and a wavelength selection switch of Fig. 13 that is described later.

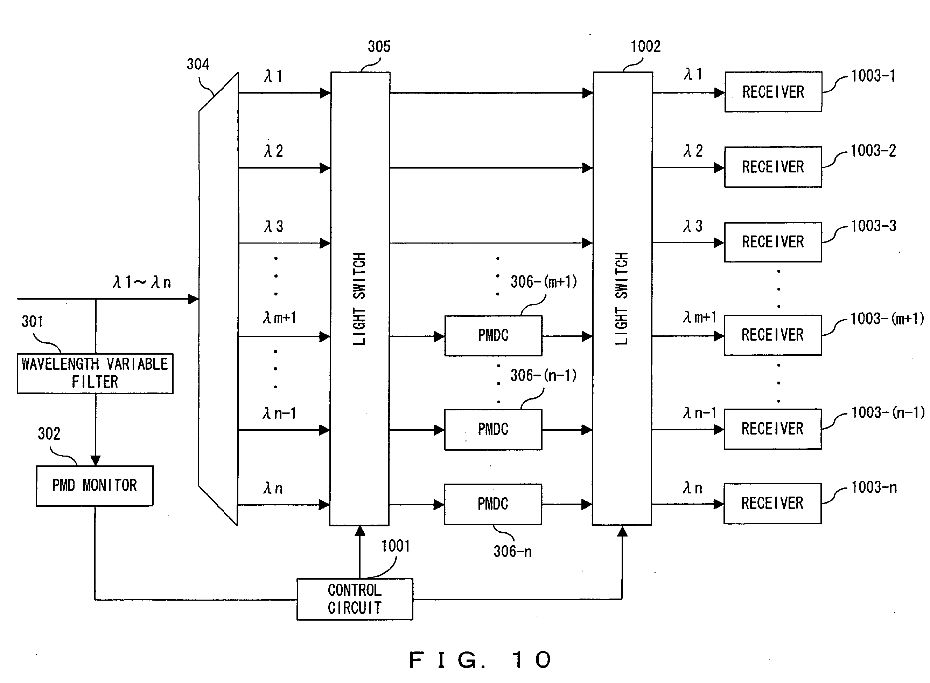

The control device 106 corresponds to, for example, control circuits 303, 1001, 1201 and 1404 of Figs. 3, 10, 12, 14 and 17 while the light switch for output device 107 corresponds to, for example, a light switch 1002 of Figs. 10, 12, 14 and 17.

According to the present invention, the size and the cost of a PMD compensation device are reduced since a PMD compensation device need not be arranged for each wavelength in a light wavelength multiplexing transmission system.

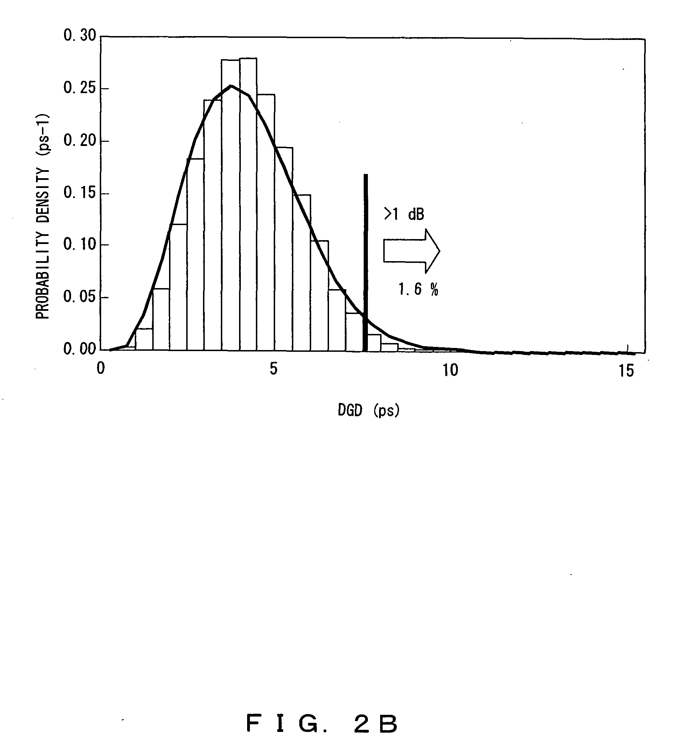

In the present preferred embodiment, only the wavelength that is deteriorated by PMD is selected to be compensated without arranging a PMD compensation device for each wavelength. At transmission speed equal to or below 40Gbit/s, the waveform deterioration caused by PMD need not be always compensated. For example, in the case where the PMD value of a transmission path is 4ps, the probability such that the DGD value becomes equal to or greater than 7.5ps (corresponds to 1dB in terms of Q value by PMD) is 1.6% as shown in Fig. 2B. Therefore, it is economical to select a wavelength necessary for compensation and to compensate the selected wavelength without arranging PMD compensation devices to all the wavelengths.

The fluctuation over time of a DGD for each wavelength is measured by the hour. The DGD mainly fluctuates while a temperature greatly changes at sunrise and sunset. On the other hand, the wavelength variable filter can measure a DOP value at several hundreds $\mu s$ every one wavelength. Therefore, it is possible to measure DOP values of all the wavelengths using one or several monitors and determination can be performed.

A signal is extracted for each wavelength from the multiplexed light signal and the PMD evaluation value indicating the degree of deterioration caused by PMD of a signal of the extracted wavelength is measured, using the wavelength variable filter. Furthermore, after the multiplexed light signal is demultiplexed by a demultiplexer, only the wavelength that is deteriorated by PMD is inputted into a PMD compensation device using a light switch and a wavelength that need not require compensation is not passed through the PMD compensation device. After that, the light signal of each wavelength is inputted into the predetermined receiver for each wavelength using a light switch.

Fig. 3 shows the configuration example of such a PMD compensation device. The PMD compensation device of Fig. 3 comprises the wavelength variable filter 301, the PMD monitor 302, the control circuit 303, the demultiplexer 304, the light switch 305 and the (n-m) pieces of PMD compensation devices (PMDCs) 306-j (j=m+1, ..., n). The light signal obtained by multiplexing n wavelengths $\lambda 1$ to $\lambda n$ is demultiplexed for each wavelength, thereby outputting the demultiplexed light signals to n receivers 307-i (i=1,...n).

The number of arranged PMD compensation devices 306-j is equal to or less than the number n of wavelengths (m=0, ..., n-1) and this number is preferably less than the number n of wavelengths. The control circuit 303 includes, for example, a central processing unit (CPU) and a memory, and controls a PMD compensation device by carrying out a program.

The demultiplexer 304 demultiplexes for each wavelength a light signal that is multiplexed to be transmitted. The light switch 305 performs an n-to-n switching operation and switches output ports of the demultiplexed light signals for each wavelength. On the other hand, the wavelength variable filter 301 taps a part of the light signal at the former stage of the demultiplexer 304 and extracts the signal of an optional wavelength. Then, the PMD monitor 302 measures a PMD evaluation value of the extracted wavelength. As the PMD monitor 302, for example, a DOP monitor is used and a DOP value is measured as a PMD evaluation value.

The control circuit 303 determines a wavelength to be compensated on the basis of the measured PMD evaluation value and outputs the control signal for switching output ports to the light switch 305. The light switch 305 selects a wavelength to be compensated in accordance with this control signal and outputs the selected wavelength to any PMDC 306-j. As mentioned above, the PMDC 306-j includes a polarization control device, a DGD component and a PMD monitor, and it compensates the PMD of a light signal inputted from the light switch 305, thereby outputting the compensated light signal to the receiver 307-i.

The light signal of a wavelength that is not selected by the light switch 305 is directly outputted to the receiver 307-i without passing through the PMDC 306-j. The information about a wavelength to be inputted is transferred into the receivers 307-1 to 307-n from the control circuit 303.

If the DOP value for each wavelength is measured at the former stage of the demultiplexer 304, only the deterioration caused by PMD can be detected irrespective of another deterioration factor such as wavelength dispersion etc. In another detection method such as a bit error rate (BER), it cannot be determined whether or not the waveform deterioration is caused by PMD.

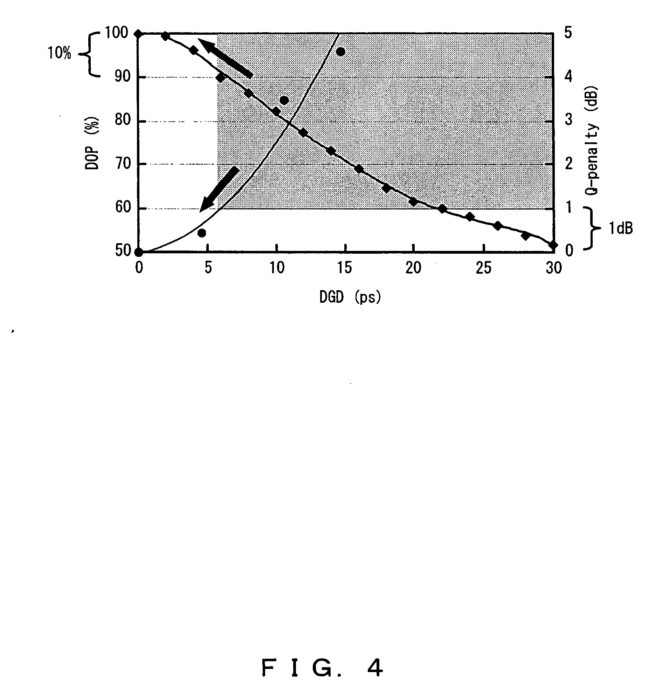

Fig. 4 shows the results of the measurement experiment of a DOP value and a Q penalty in the case where transmission speed is set to 40Gbit/s. There is a correlation between a DOP value 401 and a Q penalty 402. It is understood that the Q penalty 402 increases as the DOP value 401 decreases. Therefore, it is possible to estimate the PMD value by measuring the DOP value of a light signal.

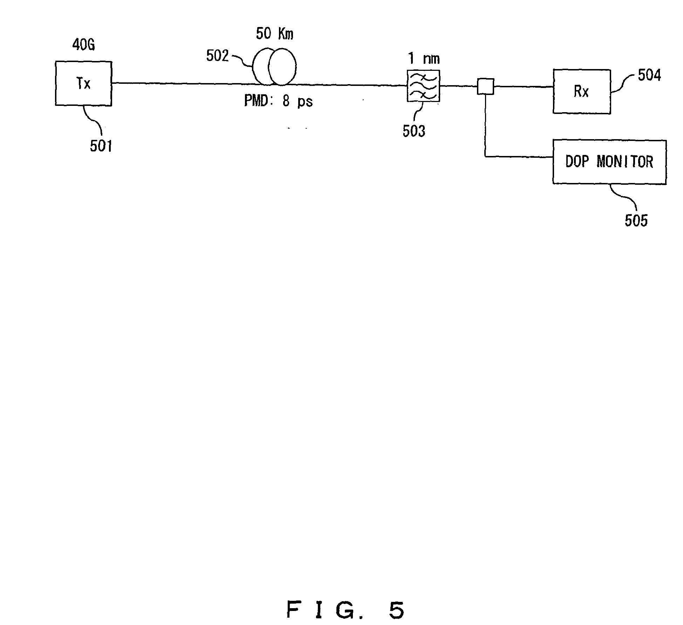

Fig. 5 shows the simulation configuration of such a light transmission system for checking the relation between a DOP value and a Q value for each wavelength. In the light transmission system of Fig. 5, a transmitter 501 transmits the light signal obtained by multiplexing wavelengths of 1528.773 to 1563.047nm, at transmission speed 40Gbit/s. The transmitted light signal passes through a transmission path 502 with a PMD value 8ps and a length of 50km and arrives at a receiver 504. However, it is assumed that the PMD condition of a light signal is fixed. At this time, the wavelength for each 1nm is extracted by a wavelength variable filter 503 and the extracted wavelength is inputted into a DOP monitor 505.

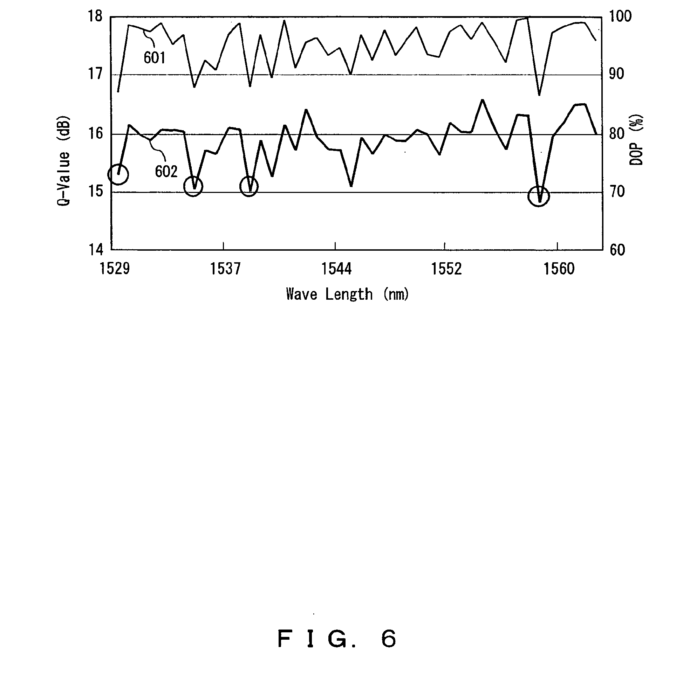

According to this simulation, the relation between a DOP value 601 and a Q value 602 are obtained for each wavelength as shown in Fig. 6. In this case, it is conceivable that a wavelength with a DOP value 601 equal to or less than 90% is selected by a light switch to be inputted into a PMDC and waveform compensation is implemented. Needless to say, another value may be used as a threshold of the DOP value 601.

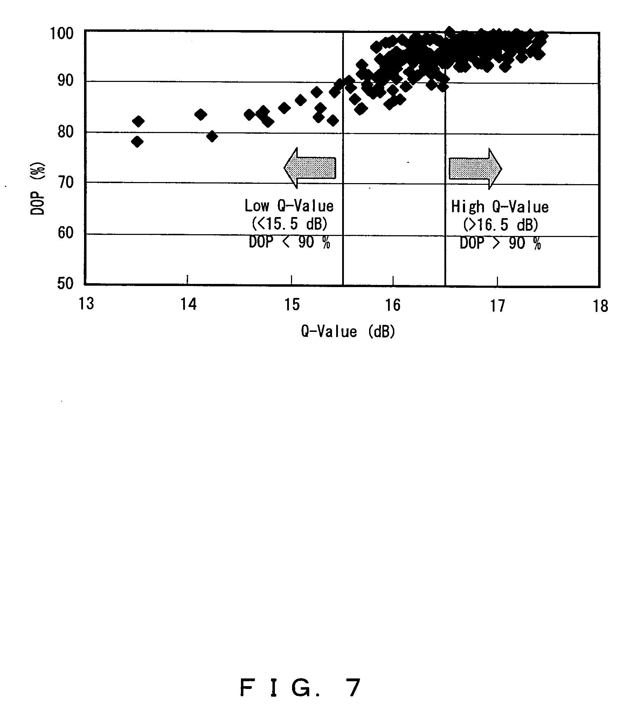

Fig. 7 shows the distribution of DOP values and Q values in the case where the PMD conditions of a light signal are random (250 conditions) in the light transmission system of Fig. 5. In this regard, the wavelength of a light signal that is transmitted from the transmitter 501 is set to 1550.116nm.

When a PMDC is tentatively applied to the signal with a Q value equal to or less than 15.5dB, all the DOP values are below 90% in respect of a signal with such a low Q value. Therefore, if a signal with a low DOP value is selected, a waveform deteriorated by PMD is selected. Even in the case where a Q value is greater than 15.5dB and PMD compensation is not required, there is a signal with the DOP value below 90%. There are two ways of handling such a signal.

One method is to implement PMD compensation for all the signals with DOP values equal to less than 90%. The other method is to extract only a signal such that the distribution of DOP values concentrates on equal to or less than 90% and to implement PMD compensation only for the extracted signal, on the basis of not only one measurement data but also dozens to hundreds of measurement data. In terms of the signals with high Q values equal to or greater than 16.5dB, all the DOP values exceed 90%. Therefore, it is possible to specify the Q value of a signal by measuring the DOP value.

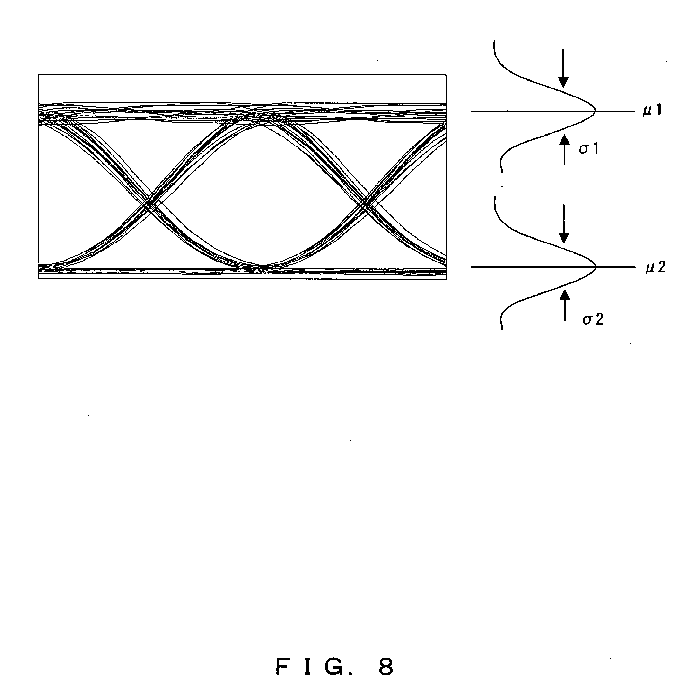

Meanwhile, a Q value represents a signal-to-noise ratio when it is assumed that a noise component complies with Gauss distribution. A Q value is defined by an equation (2) using a signal amplitude ($\mu$) and noise distribution ($\sigma$) as shown in Fig. 8 and the log expression becomes Q(dB)=20logQ.

$$Q = \frac{\left| \mu_2 - \mu_1 \right|}{\sigma_2 + \sigma_1} \qquad (2)$$

In the case where Q(dB) under the condition of no deterioration by PMD is set to a standard (zero) and a light signal is deteriorated by PMD, a Q penalty shows the guideline for how much a light intensity (dB) is increased in order to obtain a signal the quality of which is the same as the signal with no deterioration. Therefore, when the Q value increases, the Q penalty decreases.

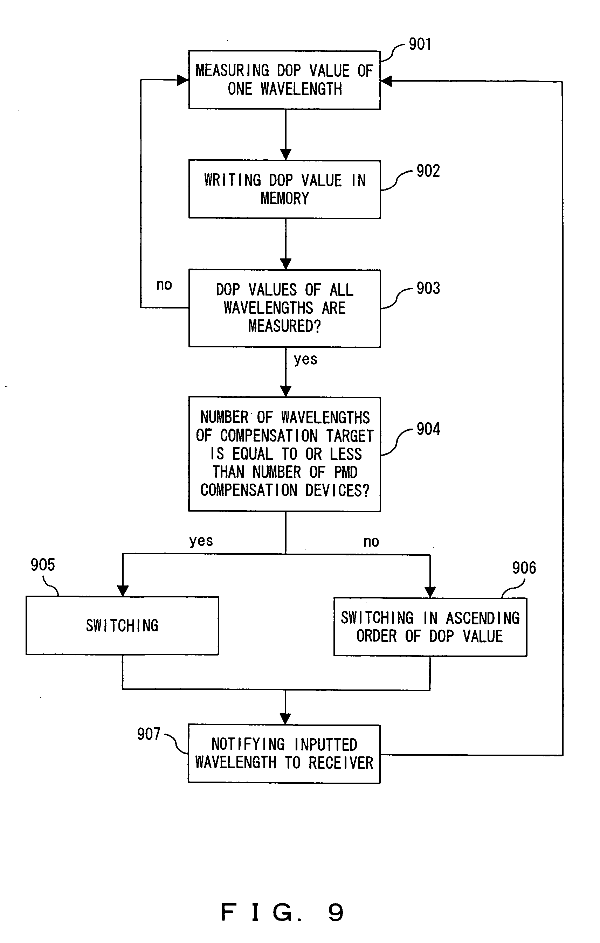

Fig. 9 shows the flowchart that shows the operation of the control circuit 303 in the case where a DOP monitor is used in the PMD compensation device of Fig. 3. At first, the control circuit 303 measures the DOP of a light signal of the first wavelength using the PMD monitor 302 (step 901) and then writes the DOP value in a memory (step 902). Subsequently, the circuit checks whether or not the DOP measurement is implemented for all the wavelengths (step 903) and repeats the operations in and after step 901 for the wavelength if a wavelength that is not measured remains.

When the DOP measurement for all the wavelengths terminates, the DOP value for each wavelength is compared with a threshold and the wavelength with the DOP value below the threshold is selected as a target of PMD compensation (step 904) . Then, the number of wavelengths is compared with the number (n-m) of PMDCs 306-j.

If the number of the wavelengths of a compensation target is less than the number of PMDCs 306-j, the light switch 305 is controlled in such a way that the routes of the wavelengths of compensation targets are sequentially switched to the output ports to PMDCs 306-j and the routes of the wavelengths of not-compensation targets are switched to the output ports (throughports) to the receivers 307-i in wavelength order (step 905).

When the number of wavelengths of a compensation target is greater than the number of PMDCs306-j, wavelengths the number of which is equal to the number of PMDCs 306-j are selected in the ascending order of DOD values from among wavelengths of a compensation target (step 906). Then, the light switch 305 is controlled in such a way that these routes are switched to the output ports to PMDC306-j and the routes of other wavelengths to a throughports in the wavelength order.

Next, the information about the inputted wavelength to each receiver 307-i is transferred (step 907) and the operations in and after step 901 are repeated.

In the PMD compensation device of Fig. 3, although the wavelength of a light signal that is outputted to each receiver is not fixed, only the light signal of a wavelength specific to each receiver can be outputted.

Fig. 10 shows the configuration example of such a PMD compensation device. The PMD compensation device of Fig. 10 comprises the wavelength variable filter 301, the PMD monitor 302, the demultiplexer 304, the light switch 305, (n-m) pieces of PMDCs 306-j (j=m+1, ..., n), a control circuit 1001 and a light switch 1002. Among these units, the operations of the wavelength variable filter 301, the PMD monitor 302, the demultiplexer 304, the light switch 305 and the PMDCs 306-j are similar as in Fig. 3.

A light switch 1002 is provided at the latter stage of PMDCs 306-j and implements n-to-n switching operation, thereby outputting a light signal that is inputted from the light switch 305 or the PMDCs 306-j to an optional output port. The outputted light signal is inputted into a predetermined receiver among n receivers 1003-i (i=1, ..., n). In this case, since the wavelength of a light signal that is inputted into each receiver 1003-i is predetermined as shown in Fig. 10, the information about a wavelength inputting from the control circuit 1001 into the receiver 1003-i should not be transferred.

The control circuit 1001 determines a wavelength that needs compensation based on a PMD evaluation value from the PMD monitor 302 and outputs a control signal for switching an output port to the light switches 305 and 1002.

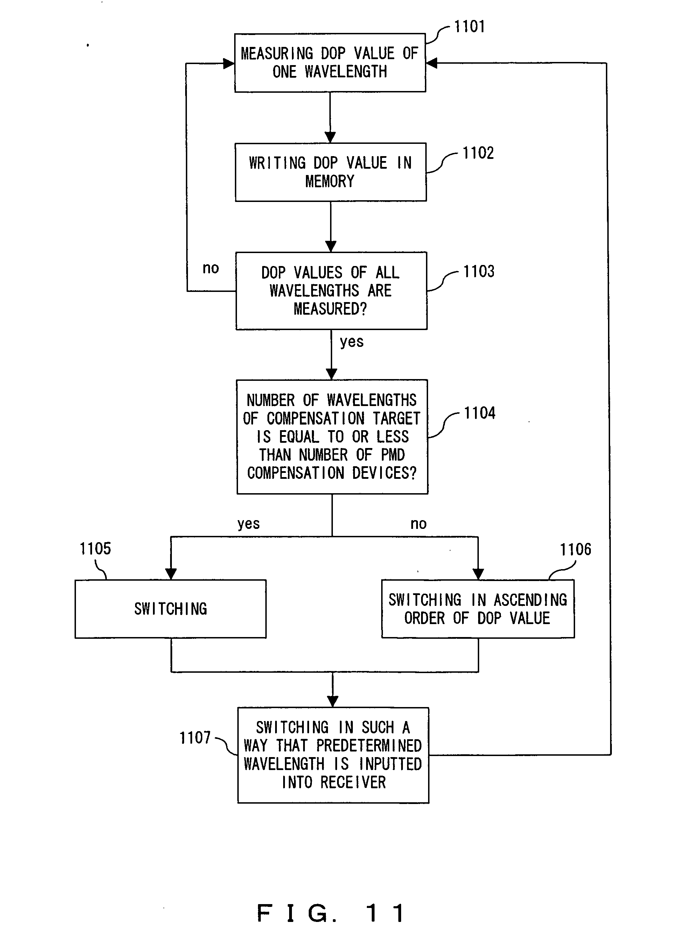

Fig. 11 is the flowchart that shows the operations of the control circuit 1101 in the case where a DOP monitor is used in the PMD compensation device of Fig. 10. The operations in steps 1101 to 1106 of Fig. 11 are identical to the operations in steps 901 to 906 of Fig. 9, respectively. When the switching control of the light switch 305 terminates, the control circuit 1101 switches the light switch 1002 in such a way that the light signal of a predetermined wavelength is inputted into each receivers 1003-i (step 1107). Then, the circuit repeats the operations in and after step 1101.

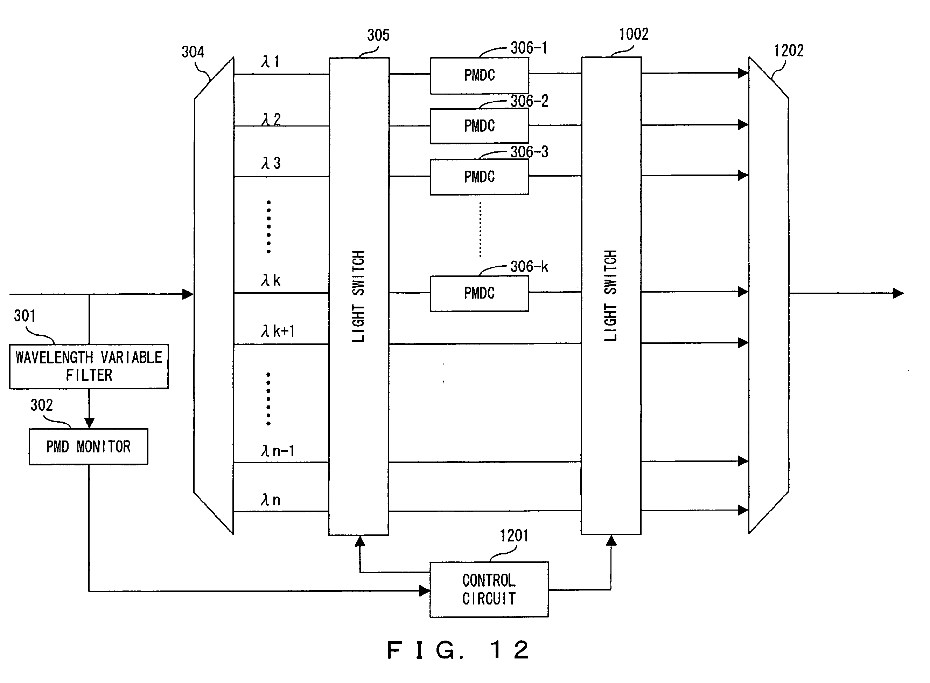

Fig. 12 shows the configuration example in the case where the PMD compensation device of Fig. 10 is arranged at the relay node of a light transmission system. The PMD compensation device of Fig. 12 comprises the wavelength variable filter 301, the PMD monitor 302, the demultiplexer 304, the light switch 305, k pieces of PMDCs 306-j (j=1,...,k), the light switch 1002, a control circuit 1201 and a multiplexer 1202. Among these units, the operations of the wavelength variable filter 301, the PMD monitor 302, the demultiplexing device 304, the light switches 305 and 1002 and also the PMDCs 306-j are similar as in Fig. 10.

Themultiplexer 1202 is providedat the latter stage of the light switch 1002 and multiplexes light signals outputted from the light switch 1002, thereby outputting the multiplexed light signal to a transmission path. In this way, the light signal that receives PMD compensation is multiplexed again and the multiplexed signal is transmitted to the next node.

The control circuit 1201 outputs control signals for switching an output port to the light switches 305 and 1002 in the same way as the control circuit 1101 of Fig. 10. At this time, the light switch 1002 is switched in such a way that light signals of the preset wavelength are inputted into n input ports of the multiplexer 1202.

If the multiplexer similar to that of Fig. 12 is added to the PMD compensation device of Fig. 3, this device can be arranged at the relay node of a light transmission system.

In the above-mentioned configuration, a wavelength variable filter is used to extract the signal of a desired wavelength from among multiplexed light signals. Instead, a wavelength selection switch can be used.

Fig. 13 shows the configuration example of such a wavelength selection switch. The wavelength selection switch of Fig. 13 comprises a demultiplexer 1301 and a light switch 1302. The demultiplexer 1301 demultiplexes the multiplexed light signal for each wavelength. The light switch 1302 implements an n-to-1 switching operation and selects a light signal of the desired wavelength, thereby outputting the selected signal to the PMD monitor 302. The DOP measurement of the thus-selected wavelength is implemented and the selection of the wavelength of a compensation target is implemented on the basis of the DOP value of each wavelength.

In the above-mentioned configuration, the control circuit does not control the operations of a PMDC but a PMDC can be controlled on the basis of the measurement results of the PMD monitor.

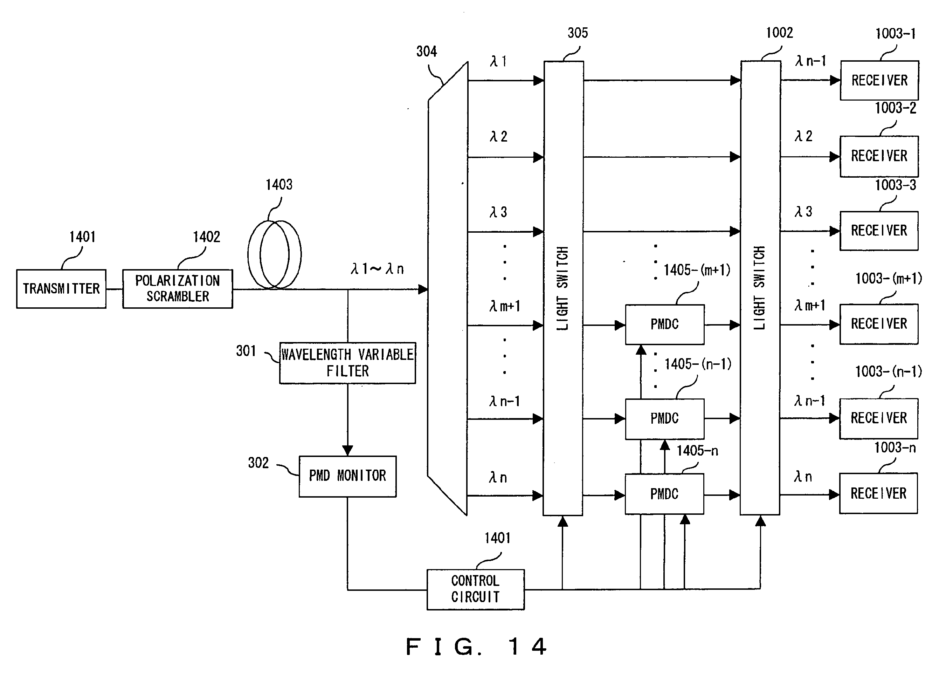

Fig. 14 shows the configuration example of the light transmission system including such a PMD compensation device. The PMD compensation device of Fig. 14 corresponds to the one obtained by adding a change to the PMD compensation device of Fig. 10. This device comprises the wavelength variable filter 301, the PMD monitor 302, the demultiplexer 304, the light switches 305 and 1002, (n-m) pieces of PMDCs 1405-j (j=m+1, ... n) and a control circuit 1404. Among these units, the operations of the wavelength variable filter 301, the PMD monitor 302, the demultiplexer 304 and the light switches 305 and 1002 are similar as in Fig. 10. Each of the PMDCs 1405-j includes a polarization control device and a DGD component but it does not include a PMD monitor.

In this case, a light signal that is outputted from a transmitter 1401 is transmitted to a transmission path 1403 after this light signal penetrates a polarization scrambler 1402. The polarization scrambler 1402 changes all the polarization conditions with time in such a way that the polarization condition of a light signal covers a Poincare sphere.

The PMD monitor 302 sequentially implements the DOP measurement for each wavelength. Since all the polarization conditions are generated by the polarization scrambler 1402 in this example, the PMD monitor 302 can estimate the polarization condition of a light signal. By generating all the polarization conditions, the light signal is separated in the transmission path 1403 into two components such as a fast wave axis and a slow wave axis by the different ratios depending on polarization conditions.

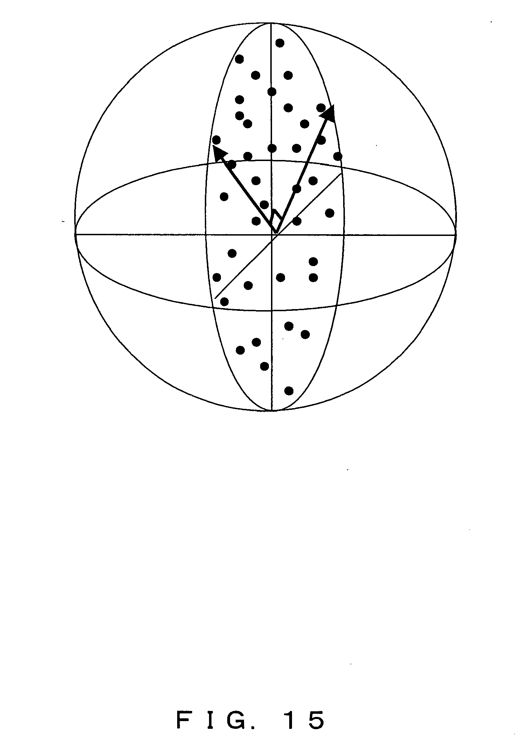

Thereupon, when polarization conditions are monitored on the basis of the value of each component of the Stokes vector that is acquired by the PMD monitor 302 and the monitored polarization conditions are expressed with time on Poincare sphere, the polarization conditions become ellipsoid as shown in Fig. 15. The polarization conditions (fast wave axis and slow wave axis) of a light signal can be obtained from the ellipticity of this ellipsoid (for example, refer to nonpatent literature 8).

The control circuit 1404 outputs to the light switches 305 and 1002 a control signal for switching output ports in the same way as a control circuit 1101 of Fig. 10. Furthermore, the circuit generates a control signal for controlling the PMDC 1405-j on the basis of the information about the polarization condition of a light signal that is obtained from the PMD monitor 302 and it outputs the thus-generated signal. In accordance with this control signal, the polarization control device of the PMDC 1405-j implements the adjustment for matching the axes (fast wave axis and slow wave axis) of a DGD component with the axis of a light signal in such a way that the PMD of the inputted light signal is compensated.

According to such a configuration, the polarization control device is controlled on the basis of the output of the PMD monitor 302 and accordingly the PMDC need not be provided with a PMD monitor. Therefore, the configuration of the PMDC is further simplified.

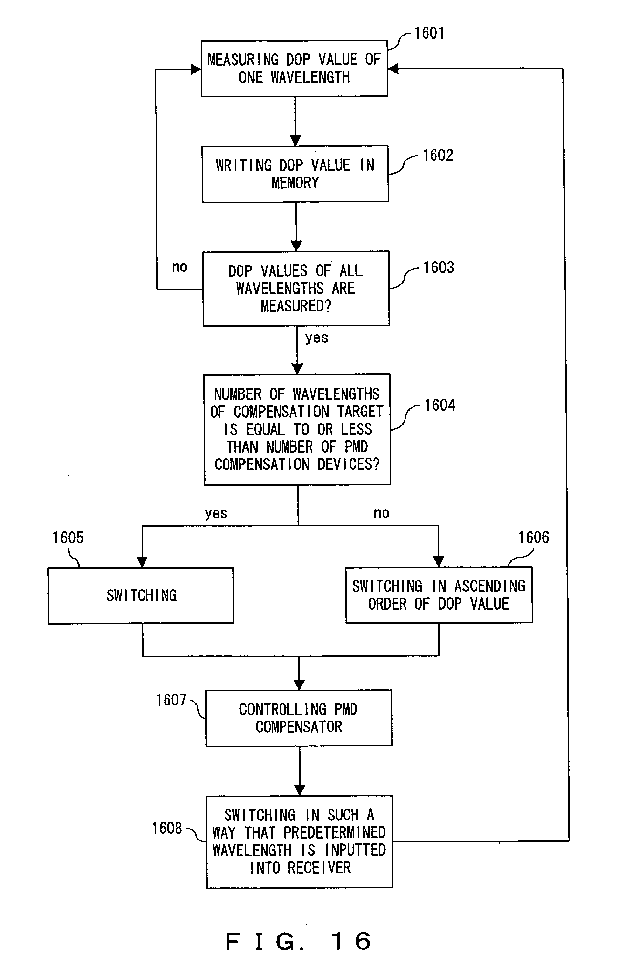

Fig. 16 is a flowchart that shows the operations of the control circuit 1404 in the case where a DOP monitor is used in the PMD compensation device of Fig. 14. The operations in steps 1601 to 1606 and also 1608 of Fig. 14 are the same as those in steps 1101 to 1106 and 1107 of Fig. 11, respectively. When the change control of the light switch 305 terminates, the control circuit 1404 controls the polarization control device of each PMDC 1405-j on the basis of the information about the polarization condition of a light signal (step 1607) and implements the operation in step 1608.

Furthermore, it is possible to add the change similar to that of Fig. 14 to the PMD compensation device of Figs. 3 and 12.

In the above-mentioned preferred embodiments, the case where a DOP monitor is used as the PMD monitor 302 is mainly explained but a BER monitor and an SHB monitor can be used as the PMD monitor 302. In this case, the compensation of the waveform deterioration other than PMD is implemented before the compensation of PMD.

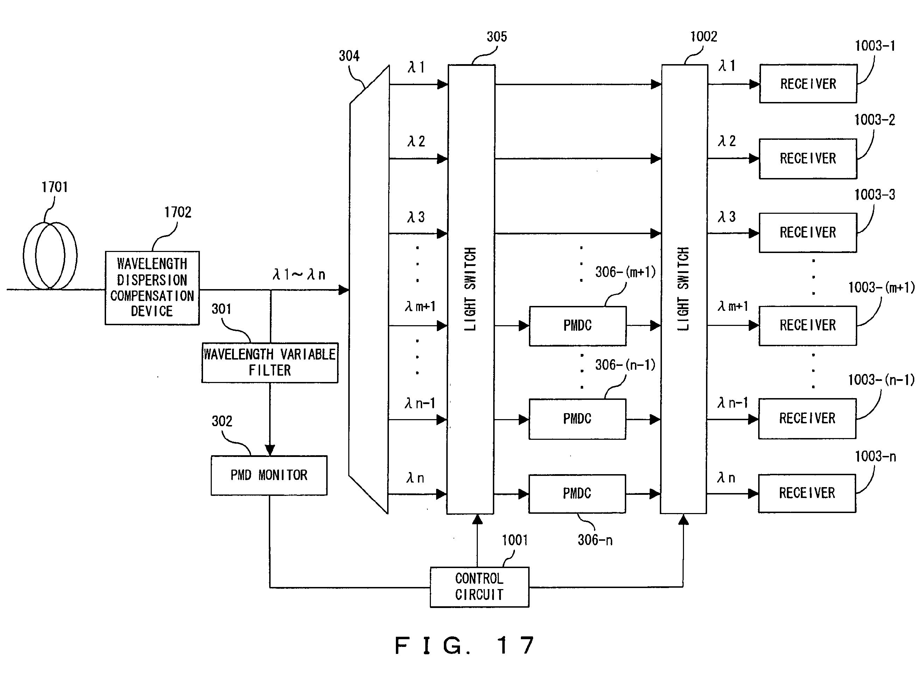

Fig. 17 shows the configuration example of a PMD compensation device that compensates even the waveform deterioration caused by wavelength dispersion other than the waveform deterioration caused by PMD. The PMD compensation device of Fig. 17 has a configuration such that a wavelength dispersion compensation device 1702 is provided at the former stage of the PMD compensation device of Fig. 10. The light signal inputted from a transmission path 1701 is inputted into a PMDC 306-j through the demultiplexer 304 and the light switch 305 after passing through the wavelength dispersion compensation device 1702.

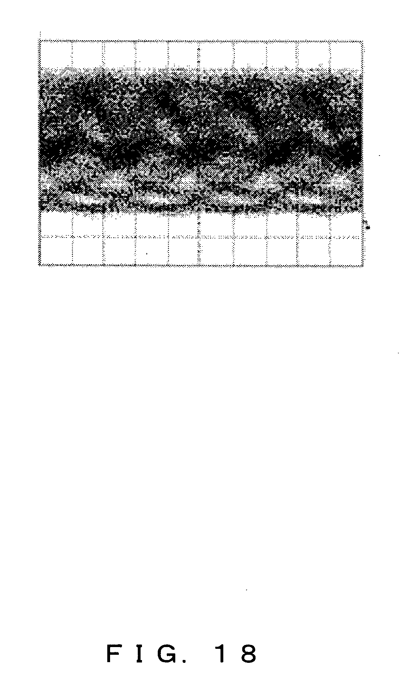

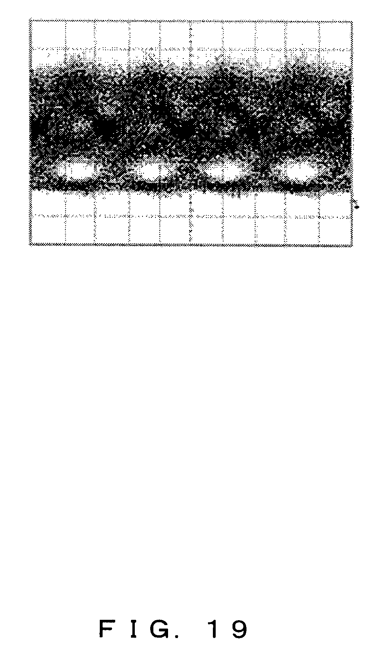

Figs. 18 to 20 show the compensation process of a waveform in the case where there is the waveform deterioration not only by PMD but also the waveform deterioration by wavelength dispersion. Fig. 18 shows the waveform at the input end of the wavelength dispersion compensation device 1702 after passing through the transmission path 1701. Fig. 19 shows the waveform of the output end of the wavelength dispersion compensation device 1702. As the wavelength dispersion compensation device 1702, a dispersion compensation fiber, a VIPA (Virtually Imaging Phase Array), fiber grating etc. are used.

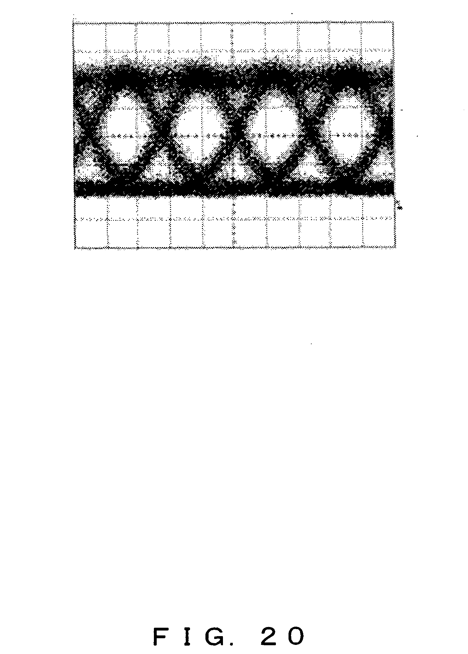

Since thewaveformof Fig. 19 after the compensation of wavelength dispersion is implemented includes only the waveform deterioration caused by PMD, the configuration as shown in Fig.17 is effective not only for a DOP monitor but also a PMD monitor like a BER monitor and an SHB monitor that cannot divide the waveform deterioration by PMD from the waveform deterioration by other than PMD. Therefore, it becomes possible to compensate the waveform deterioration by PMD even in the case where a BER monitor or an SHB monitor is used as the PMD monitor 302 if the waveform deterioration other than PMD is compensated at the former stage. The waveform after the PMD compensation at the output end of the light switch 1002 becomes like Fig. 20.


**Claims**

1. A polarization mode dispersion compensation apparatus comprising:

    one or more polarization mode dispersion compensation devices (101);
    a demultiplexing device (102) demultiplexing for each wavelength a multiplexed light signal that is wavelength-multiplexed and transmitted;
    a light switch for selection device (103) switching an output port of a light signal of each demultiplexed wavelength and selectively outputting a light signal of one or more wavelengths to the polarization mode dispersion compensation device (101);
    an extraction device (104) tapping a part of the multiplexed light signal and extracting a signal for each wavelength;
    a measurement device (105) measuring an evaluation value that shows a degree of signal deterioration caused by polarization mode dispersion for each wavelength, using the extracted signal; and
    a control device (106) controlling the light switch for selection device (103) in such a way that a wavelength of a target of polarization mode dispersion compensation is selected based on the measured evaluation value, a light signal of the selected wavelength is outputted to the polarization mode dispersion compensation device (101) and a light signal of a not-selected wavelength is not outputted to the polarization mode dispersion compensation device (101).

2. The polarization mode dispersion compensation apparatus according to claim 1, further comprising a multiplexing device multiplexing a light signal that receives polarization mode dispersion compensation by the polarization mode dispersion compensation device (101) and a light signal of the not-selected wavelength.

3. The polarization mode dispersion compensation apparatus according to claim 1, further comprising a light switch for output device (107) switching an output port of a light signal that receives polarization mode dispersion compensation by the polarization mode dispersion compensation device (101) with an output port of a light signal of the not-selectedwavelength, wherein
the control device (106) controls the light switch for output device (107) in such a way that each light signal is outputted to a determined route for each wavelength.

4. The polarization mode dispersion compensation apparatus according to claim 3, further comprising a multiplexing device multiplexing light signals of respective wavelengths and outputting the multiplexed light.

5. The polarization mode dispersion compensation apparatus according to claim 1, further comprising polarization mode dispersion compensation devices (101) a number of which is less than a number of wavelengths of the multiplexed light signal.

6. The polarization mode dispersion compensation apparatus according to claim 1, wherein
the control device (106) selects a wavelength with an evaluation value equal to or less than a threshold as a target of the polarization mode dispersion compensation.

7. The polarization mode dispersion compensation apparatus according to claim 1, wherein
the measurement deice (105) measures a polarization degree as the evaluation value.

8. The polarization mode dispersion compensation device (101) according to claim 1, wherein the extraction device (104) includes a wavelength selection filter.

9. The polarization mode dispersion compensation apparatus according to claim 1, wherein the extraction device (104) comprising:

    a demultiplexing device (102) demultiplexing the multiplexed light signal for each wavelength; and
    a light switch device selecting a light signal of one wavelength from among light signals of respective demultiplexed wavelengths and outputting the selected light signal.

**10.** The polarization mode dispersion compensation apparatus according to claim 1, wherein:

the measurement device (105) generates information about a polarization condition for each wavelength using the extracted signal; and

the control device (106) controls the polarization mode dispersion compensation device (101) using the generated information in such a way an axis of a birefringence component of the polarization mode dispersion compensation device (101) matches an axis of an inputted light signal.

**11.** A polarization mode dispersion compensation method, comprising:

tapping a part of a multiplexed light signal that is wavelength-multiplexed and transmitted and extracting a signal for each wavelength;

measuring an evaluation value that shows a degree of signal deterioration caused by polarization mode dispersion for each wavelength, using the extracted signal;

selecting a wavelength of a target of polarization mode dispersion compensation based on the measured evaluation value;

demultiplexing the multiplexed light signal for each wavelength;

implementing polarization mode dispersion compensation for a light signal of the selected wavelength and not-implementing polarization mode dispersion compensation for a not-selected wavelength, among light signals of respective demultiplexed wavelengths.

Slow AXIS

Fast AXIS

11

F I G. 1 A

F I G. 1 B

EP 1 615 360 A2

25

26

BPF    27

f =1/2T (GHz)
COMPONENT
INTENSITY

f =1/4T (GHz)
COMPONENT
INTENSITY

28

F I G. 1 C

F I G. 1 D

F I G. 1 E

EP 1 615 360 A2

F I G. 2 A

EP 1 615 360 A2

F I G. 2 B

F I G. 3

F I G. 4

40G

502 ⌒ 50 Km

1 nm

Tx

PMD: 8 ps

503

Rx ⌒ 504

501

DOP MONITOR

505

F I G. 5

F I G. 6

F I G. 7

F I G. 8

MEASURING DOP VALUE OF ONE WAVELENGTH ⟋901

WRITING DOP VALUE IN MEMORY ⟋902

DOP VALUES OF ALL WAVELENGTHS ARE MEASURED? ⟋903

no

yes

NUMBER OF WAVELENGTHS OF COMPENSATION TARGET IS EQUAL TO OR LESS THAN NUMBER OF PMD COMPENSATION DEVICES? ⟋904

yes

no

905

SWITCHING

906

SWITCHING IN ASCENDING ORDER OF DOP VALUE

907 NOTIFYING INPUTTED WAVELENGTH TO RECEIVER

F I G. 9

FIG. 10

MEASURING DOP VALUE OF ONE WAVELENGTH ⌐1101

WRITING DOP VALUE IN MEMORY ⌐1102

DOP VALUES OF ALL WAVELENGTHS ARE MEASURED? ⌐1103

no

yes

NUMBER OF WAVELENGTHS OF COMPENSATION TARGET IS EQUAL TO OR LESS THAN NUMBER OF PMD COMPENSATION DEVICES? ⌐1104

yes

no

1105 SWITCHING

1106 SWITCHING IN ASCENDING ORDER OF DOP VALUE

1107 SWITCHING IN SUCH A WAY THAT PREDETERMINED WAVELENGTH IS INPUTTED INTO RECEIVER

F I G. 1 1

F I G. 1 2

EP 1 615 360 A2

F I G .  1 3

F I G. 1 4

F I G. 1 5

MEASURING DOP VALUE OF ONE WAVELENGTH — 1601

WRITING DOP VALUE IN MEMORY — 1602

DOP VALUES OF ALL WAVELENGTHS ARE MEASURED? — 1603

no

yes

NUMBER OF WAVELENGTHS OF COMPENSATION TARGET IS EQUAL TO OR LESS THAN NUMBER OF PMD COMPENSATION DEVICES? — 1604

yes                    no

1605 — SWITCHING

1606 — SWITCHING IN ASCENDING ORDER OF DOP VALUE

1607 — CONTROLLING PMD COMPENSATOR

1608 — SWITCHING IN SUCH A WAY THAT PREDETERMINED WAVELENGTH IS INPUTTED INTO RECEIVER

F I G. 1 6

F I G. 1 7

F I G. 1 8

F I G . 1 9

F I G. 2 0